# EUROPÄISCHE PATENTANMELDUNG

(11) **EP 2 600 239 A2**
(43) Veröffentlichungstag der Anmeldung: **05.06.2013**
(21) Anmeldenummer: 12194711.3
(22) Anmeldetag: 29.11.2012
(51) Int. Cl.: G06F 7/544

(54) **Verfahren zur Generierung eines Display-Anzeigewertes bei einer Gewichtsmessung**

(30) Priorität: 01.12.2011 DE 102011055932
(71) Anmelder: Vorwerk & Co. Interholding GmbH, 42275 Wuppertal (DE)
(72) Erfinder: Schmidt, Andreas, 40822 Mettmann (DE); Meggle, Martin, 33442 Herzebrock (DE)
(74) Vertreter: Müller, Enno

(57) **Zusammenfassung**

Die Erfindung betrifft ein Verfahren zur Generierung eines Display-Anzeigewertes bei einer Gewichtsmessung mit einer Waage (3), insbesondere einer Küchenwaage, wobei in einer Zeitabfolge digital erfasste Gewichtswerte in der Abfolge ihrer Erfassung in ein erstes Register (13) geschrieben werden, wobei weiter die in dem ersten Register (13) enthaltenen Werte in einer bestimmten Abfolge jeweils in ein zweites Register (15) übertragen werden, in welchem zweiten Register (15) eine Sortierung der Werte durchgeführt wird und ein mittlerer Wert (17, 22) der sortierten Werte bestimmt wird, und danach der mittlere Wert (17, 22) des zweiten Registers (15) als Anzeigewert verwendet wird. Um ein Verfahren der in Rede stehenden Art mit guter Filterwirkung bei geringem Aufwand insbesondere hinsichtlich der Hardware anzugeben, wird vorgeschlagen, dass nur ein Teil der Werte des ersten Registers (13) in das zweite Register (15) übertragbar ist, wobei der Teil, der übertragen wird, in Abhängigkeit eines Werteanstieges der Werte des ersten Registers (13) in der Reihenfolge Ihres Eintrages in das erste Register (13) bestimmt wird.

## Beschreibung

Die Erfindung betrifft ein Verfahren zur Generierung eines Display-Anzeigewertes bei einer Gewichtsmessung mit einer Waage, insbesondere einer Küchenwaage, wobei in einer Zeitabfolge digital erfasste Gewichtswerte in der Abfolge ihrer Erfassung in ein erstes Register geschrieben werden, wobei weiter die in dem ersten Register enthaltenen Werte in einer bestimmten Abfolge jeweils in ein zweites Register übertragen werden, in welchem zweiten Register eine Sortierung der Werte durchgeführt wird und ein mittlerer Wert der sortierten Werte bestimmt wird, und danach der mittlere Wert des zweiten Registers als Anzeigewert verwendet wird.

Verfahren der in Rede stehenden Art sind bekannt. Diese finden insbesondere Anwendung bei Waagen, insbesondere elektronischen Waagen für den Haushaltsbereich, weiter insbesondere bei Küchenwaagen. Mittels des Verfahrens wird ein Display-Anzeigewert in Form eines Gewichtswertes generiert, wodurch bevorzugt die Glättung eines digitalisierten Analogsignals, bspw. eines Gewichtssignals, erfolgt. Bekannt ist diesbezüglich weiter der Einsatz eines einfachen Medianfilters zur Filterung analoger Signale, der beliebige Datenströme unterteilt und die einzelnen Teile für die weitere Verarbeitung in sich sortiert und auf ihren Medianwert reduziert. Dies reduziert die Datenmenge erheblich und filtert kurzlebige Störungen. Die glättende Wirkung eines Tiefpasscharakter aufweisenden Filters wird bevorzugt durch eine Vielzahl von bekannten Algorithmen erreicht, so bspw. Butterworth, Bessel, Chebychev usw. Darüber hinaus sind mehrstufige Filter bekannt, die durch eine Verhaltensprüfung des Signalverlaufes festlegen, wie sich der Filter verhalten soll. Auf diese Weise kann die glättende Wirkung verstärkt oder abgeschwächt werden. Da sich die Glättung immer umgekehrt proportional zur Dynamik des Ausgangssignals verhält, entsteht ein komplexer Zusammenhang, mit dem das Signalverhalten umfangreich und situationsabhängig beeinflusst werden kann. Unabhängig von diesen Softwarefiltern kann auch das elektrische Analogsignal selbst durch eine Hardware-Schaltung gefiltert werden. Dies beginnt bei einfachen, passiven RC-Gliedern und führt zu beliebig komplexen Schaltungen mit Operationsverstärkern usw. Diese Schaltungen sind größtenteils in ihren Eigenschaften nur während des Schaltungsdesigns und nicht im Betrieb beeinflussbar.

Einstufige Medianfilter sind nicht adaptiv. Sie können sich nicht an die Veränderungen des Signalverhaltens anpassen. Schnelle oder große Veränderungen des Signals können so in der Anzeige träge wirken oder kleine Veränderungen nicht ausreichend gefiltert werden. Die mangelnde Anpassung wirkt gerade in einem Haushaltsgerät unkomfortabel in der Benutzung. Viele ein- und insbesondere mehrstufige Filter erzeugen einen umfangreichen Quellcode mit komplexer Entscheidungslogik und hohem Rechenaufwand. Entsprechend leistungsfähig muss die Elektronik-Hardware ausgelegt sein, um die Filterung mit der gebotenen Geschwindigkeit abarbeiten zu können. Insbesondere in belasteten Systemen mit multiplen Aufgaben kann so die Nebenaufgabe der Datenaufbereitung zu einem großen Leistungsfaktor anwachsen. Damit wirkt sie möglicherweise bestimmend auf die Leistungsklasse und die Kosten für den Controller bzw. Prozessor ein.

Im Hinblick auf den vorbeschriebenen Stand der Technik wird eine technische Problematik der Erfindung darin gesehen, ein Verfahren der in Rede stehenden Art mit guter Filterwirkung bei geringem Aufwand insbesondere hinsichtlich der Hardware anzugeben.

Eine mögliche Lösung der Aufgabe ist nach einem ersten Erfindungsgedanken bei einem Verfahren gegeben, welches darauf abgestellt ist, dass nur ein Teil der Werte des ersten Registers in das zweite Register übertragbar ist, wobei der Teil, der übertragen wird, in Abhängigkeit eines Werteanstieges der Werte des ersten Registers in der Reihenfolge ihres Eintrages in das erste Register bestimmt wird. Zufolge dieser Ausgestaltung ist ein verbessertes Verfahren zur Generierung eines Display-Anzeigewertes insbesondere bei einer Gewichtsmessung mit einer Waage gegeben. In Abhängigkeit von der Änderungsgeschwindigkeit der vorangegangenen Messwerte wird eine unterschiedliche Anzahl dieser Messwerte für die Filterung herangezogen. Auf diese Weise lassen sich insbesondere die Verzögerung und die Anstiegsgeschwindigkeit der Messwertanzeige beeinflussen. Bevorzugt ist dies gelöst durch eine Kombination des Prinzips des Medianfilters mit der Mehrstufigkeit einer adaptiven Filterung. Das dynamische Medianfilter dient der Beruhigung eines ehemals analogen, Analog/Digital-gewandelten Messsignals, um eine komfortable Ablesbarkeit des zeitlich veränderlichen Signals zu gewährleisten. Das Signal ist natürlichen Schwankungen durch seinen Rauschanteil unterworfen und bildet zusätzlich Störungen durch mechanische und elektromagnetische Einflüsse ab. Dennoch ist der Benutzer auf ein stetiges Signal angewiesen, das ihm präzise Anfangs- und Endwerte insbesondere des Wiegevorgangs anzeigt, ohne kurzzeitige Schwankungen abzubilden. Das Medianfilter hat einen diesbezüglichen, glättenden Einfluss und kann sich bevorzugt durch eine Dynamisierung an die Änderungsgeschwindigkeit des Signals anpassen. Diese Anpassung ist im Falle einer sehr langsamen Datenrate mit nur wenigen Aktualisierungen pro Sekunde besonders wirkungsvoll. Hierzu wird der mittlere Wert (Medianwert) ermittelt, d.h. derjenige Wert, der vom Maximum und Minimum jeweils gleich weit entfernt ist. Durch die Sortierung im zweiten Register findet sich dieser Medianwert in der Mitte des Indexbereiches des Sortierfelds wieder. Diese Berechnung wird bevorzugt in jedem Zyklus durchgeführt, wobei der ermittelte Medianwert im weiteren Verlauf bevorzugt zur Ausgabe des Ergebnisses auf dem Display genutzt wird. Unabhängig von einer ersten Sortierung und Ermittlung des Medianwertes wird bevorzugt eine Dynamikprüfung der Wertehistorie im Dateneingangsregister (erstes Register) durchgeführt, wobei die Differenzen einer vorgegebenen Menge von benachbarten Werten gebildet wird. Dies beginnt stets mit dem aktuellen Wert und dem Wert des vorangegangenen Zyklus und setzt sich hiernach mit steigenden Indizes fort. In Abhängigkeit von einem Ergebnis der Dynamikprüfung verkürzt der Algorithmus bevorzugt das Sortierfeld des zweiten Registers, um so die Dynamik des Filters zu erhöhen. Es wird entsprechend erkannt, dass sich im Falle eines Verfahrens zur Anzeige einer Gewichtsmessung das Gewicht in den vergangenen Schritten konstant verändert hat, so dass offensichtlich eine größere Wertänderung durchgeführt wird, die schneller angezeigt werden kann. Die Dynamikerhöhung hängt hierbei von den beiden Filterlängen des ersten und zweiten Registers ab sowie von ihrem Unterschied.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer bevorzugten Weiterbildung vorgesehen, dass der Wert eines vorbestimmten Registerplatzes in dem zweiten Register, nach erfolgter Sortierung, als mittlerer Wert genommen wird. Durch die Sortierung in dem zweiten Register ordnet sich der mittlere Wert bei einer bevorzugten ungeraden Anzahl von Speicherstellen sowohl im ersten als auch zweiten Register mittig des Indexbereiches des Sortierfeldes ein und kann entsprechend konstant adressiert und ausgelesen werden.

Weiter bevorzugt wird der Werteanstieg als Absolutwert berechnet. Durch die Berechnung mittels des Absolutwertes werden Werte erfasst, die sowohl größer als auch kleiner sind als der zuvor erfasste Wert. Entsprechend werden beide Richtungen der Werteänderung erfasst. Zudem werden bevorzugt die in das erste Register geschriebenen Werte bzgl. ihres Änderungsbetrages geprüft und in Abhängigkeit des Änderungsbetrages die Anzahl geändert, insbesondere die Anzahl der Registerwerte im zweiten Register. Auch ist diesbezüglich bevorzugt, dass der Änderungsbetrag mit einem Schwellwert verglichen wird und in Abhängigkeit des Überschreitens des Schwellwertes die Änderung der Länge des zweiten Registers vorgenommen wird. Die Absolutwerte der Differenzen werden entsprechend bevorzugt mit einem vorgegebenen Schwellwert (im Falle der Anwendung des Verfahrens bei einer Küchenwaage im Bereich einiger Gramm) verglichen und weiter bevorzugt einer UND-Verknüpfung zugeführt. Wird die Schwelle in allen Fällen überschritten, verkürzt der Algorithmus das Sortierfeld, um die Dynamik des Filters zu erhöhen.

Weiter bevorzugt sind mehr als zwei Schwellen und mehr als zwei Filterlängen implementiert, um die Abstufung der Dynamik noch feiner zu gestalten. Eine weiter bevorzugte Anpassung der Parameter bzgl. des längeren und des kürzeren zweiten Registers ermöglicht eine an den Benutzer angepasste Performance des Systems bei unterschiedlichen Messraten. So berechnet sich bei einer bekannten Datenrate und einer vom Nutzer akzeptierten Verzögerung der Parameter für insbesondere das kürzere zweite Register. Weiter bevorzugt entspricht die Anzahl von möglichen Registereinträgen im zweiten, unverkürzten Register dem Zwei- bis Vierfachen der Registeranzahl des verkürzten zweiten Registers plus 1, weiter bevorzugt dem Zweifachen plus 1.

Sofern die Dynamikprüfung keine Notwendigkeit zur Beschleunigung der Werteausgabe feststellt, wird der mittlere Wert (Medianwert) des unverkürzten zweiten Registers als Ergebniswert ausgegeben und der Programmzyklus beginnt erneut bei der Indexerhöhung des ersten Registers (Schieberegister) und der Aufnahme eines neuen Messwertes. Die Dynamikprüfung weist Möglichkeiten der Einflussnahme auf. So ist insbesondere bestimmbar, wie weit in die Vergangenheit der Werteanstieg überprüft wird, d.h. wie viele Differenzen aus chronologisch aufeinanderfolgenden Werten bestimmt werden. Weiter bevorzugt ist festlegbar, wie hoch die Schwelle ist, ab der eine Änderung der Filterdynamik erfolgt und ob es eine oder mehrere Schwellen gibt. Darüber hinaus werden dann die Reaktionen abgeleitet, d.h. das zweite Register wechselt von der ungekürzten Länge auf die gekürzte Länge oder zurück oder bewegt sich in noch feineren Abstufungen zwischen noch mehr Filterlängen. Diese Einschätzung des Verhaltens wird bevorzugt bei jedem Durchlauf des Programms, d.h. mit jedem neuen Messwert erneuert.

Im Falle einer Dynamikerhöhung wird erneut die Sortierfunktion im zweiten Register aufgerufen. In diesem Fall wird allerdings nur ein Teil des ersten Registers in das Sortierfeld mit der gekürzten Länge kopiert. Die Länge des Sortierfeldes passt sich hierbei bevorzugt dynamisch an die übergegebene Datenmenge an. In diesem Feld wird erneut bevorzugt mit einem Algorithmus wie Quicksort, Mergesort, Bubblesort oder Swapsort die Reihenfolge korrigiert und hiernach der mittlere Wert (Medianwert) im mittleren Adressfeld des gekürzten zweiten Registers als neuer Median-Kurzwert bestimmt und am Ende des Programmzyklus ausgegeben.

Während der Wechsel der Filtertiefe zu einer höheren Dynamik (Verkürzung des zweiten Registers) sich kaum in der Anzeige der angestrebten Waagenanwendung abbildet, ist der Wechsel zu einer niedrigeren Dynamik mit einem deutlich sichtbaren Sprung der Anzeigewerte verbunden. So wird bevorzugt im Falle einer Verkürzung des zweiten Registers in das erste Register ein Berechnungswert eingeschrieben, wobei weiter bevorzugt der Berechnungswert aus den mittleren Werten des gekürzten und des ungekürzten zweiten Registers abgeleitet wird. Entsprechend wird bevorzugt das unsortierte Eingangsregister in jedem Programmzyklus mit hoher Dynamik mit einem berechneten Anpassungswert modifiziert. Damit passt der erste Programmzyklus mit niedriger Dynamik nach dem Wechsel der Filtercharakteristiken seinen Ergebniswert besser zum vorherigen Ergebniswert an. Die Modifikation betrifft hierbei den Medianwert des ungekürzten zweiten Registers und basiert auf der Summe aus dem aktuellen Median-Kurzwert des gekürzten zweiten Registers und der Differenz aus den beiden Medianwerten, also der Dynamikdifferenz. Mit dieser Maßnahme verringert sich der Anzeigensprung während der Dynamikumschaltung von hoher zu niedriger Dynamik deutlich. Im Anschluss an die Modifikation des ersten Registers wird der Programmzyklus mit der Ausgabe des Median-Kurzwertes des gekürzten Registers als aktueller Anzeigewert beendet. Die Hauptschleife kehrt damit auch aus diesem Programmzweig zurück zur Indexerhöhung des ersten Registers und der Aufnahme des nächsten Messwertes. Der Berechnungswert wird hierbei bevorzugt an die Stelle des ersten Registers eingeschrieben, die bei Übertragung in das zweite Register dem mittleren Wert entspricht. Da die Werte chronologisch nachschieben, wird ein Wert aus der Vergangenheit somit überschrieben. Da der Berechnungswert mit hoher Wahrscheinlichkeit beim nächsten Durchlauf den neuen Medianwert im ungekürzten zweiten Register darstellt, muss er somit nicht weiter verschoben werden und die Sortierung wird entlastet. Angezeigt wird dieser nur dann, wenn der Rücksprung zur langsameren Dynamik erfolgt.

Der Betrag des Berechnungswertes berechnet sich aus dem Betragsunterschied des Medianwertes des ungekürzten zweiten Registers und des Median-Kurzwertes des gekürzten zweiten Registers. Hierbei verändern sich die Medianwerte bevorzugt einigermaßen gleichmäßig, wobei jedoch beide Medianwerte durchaus unterschiedliche Verhalten aufweisen. Der Unterschied tritt als eine Art Offset des Betrags zwischen den Werten auf, rührt aber insbesondere von einer zeitlichen Verschiebung her. Wird die Filterdynamik geändert, so wird bevorzugt quasi von einer Kurve auf die andere gesprungen, was sich im Display zeigt. Beim Beschleunigen der Dynamik fällt dies nicht auf, da hier ohnehin schnelle Änderungen vorliegen. Beim Verlangsamen der Dynamik haben sich die Verhältnisse definitionsgemäß beruhigt und es finden weniger Gewichtsänderungen statt. Dementsprechend würde die Dynamikänderung als ungewünschter Sprung in dem Display auftauchen. Durch die vorgeschlagene Lösung wird die Sprunghöhe über die gesamte Zeit im Hintergrund des Medianwertes des ungekürzten zweiten Registers mitgeführt, welcher nicht angezeigt wird und somit modifiziert wird. Einer sprunghaften Anzeige, insbesondere Gewichtsanzeige, ist damit entgegengewirkt. Sobald der Medianwert des ungekürzten zweiten Registers wieder der gültige ist, ist die Modifikation deaktiviert und der ungekürzte Medianwert wird im nächsten Durchlauf wieder weitergeführt.

Insgesamt benötigt die Filterung lediglich einen sehr geringen Rechenaufwand und eine vergleichsweise kleine Zahl an arithmetischen Operationen, um eine gute Filterwirkung zu erzielen und zusätzlich eine Dynamikkomponente mit einzuschließen. Durch die Mehrfachnutzung der Speicherfelder und die Extraktion von Teilmengen wird gleichzeitig der benötigte Speicherplatz minimiert. Die Filterung durch Medianwertbildung stellt nur vergleichsweise geringe Anforderungen an die Leistungsfähigkeit des verwendeten Controllers hinsichtlich Rechenleistung und Speicherplatz. Dementsprechend kann eine gute Filterwirkung mit einem geringen Aufwand für die Hardware erzielt werden. Auch die Software-Implementierung stellt sich einfach und kompakt dar.

Nachstehend ist die Erfindung anhand der beigefügten Zeichnung erläutert, die aber lediglich ein Ausführungsbeispiel darstellt. Auf der Zeichnung zeigt:
- Fig. 1: in Ansicht eine elektrisch betriebene Küchenmaschine mit einer Waage und einem Display zur Anzeige von Gewichtswerten;
- Fig. 2: ein Flussdiagramm zur Darstellung des Verfahrens;
- Fig. 3: in schematischer Darstellung die Funktionsweise eines ersten Registers des Verfahrens;
- Fig. 4: in schematischer Darstellung die Übergabe der Werte des ersten Registers in ein zweites Register und anschließender Sortierung im Sinne einer Medianfilterung;
- Fig. 5: in schematischer Darstellung eine Dynamikprüfung über Werte im zweiten Register;
- Fig. 6: in schematischer Darstellung das Vorladen des ersten Registers für einen Wechsel der Filtertiefe.

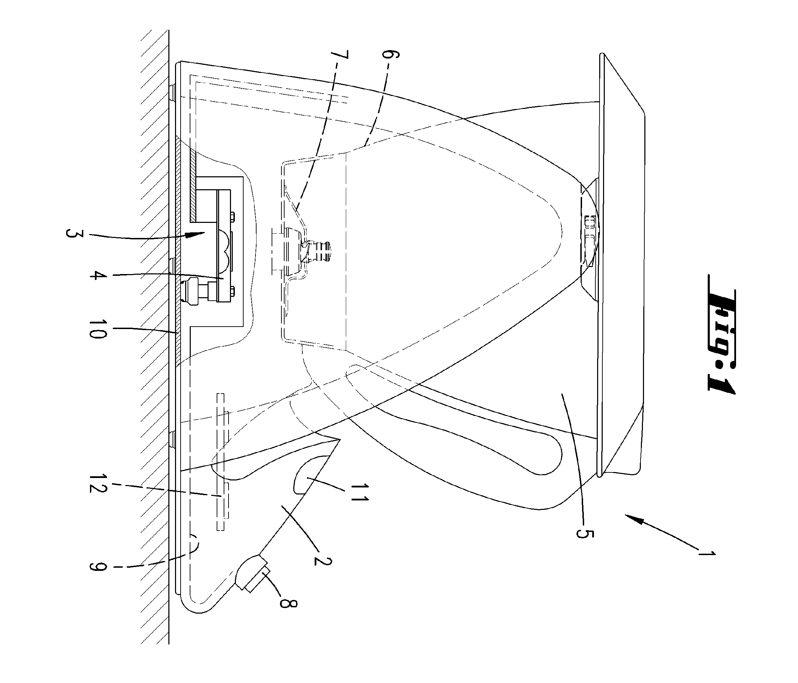

Dargestellt und beschrieben ist zunächst mit Bezug zu Fig. 1 eine Küchenmaschine 1, welche ein Gehäuse 2 aufweist. In der Küchenmaschine 1 ist eine Waage 3 integriert, bevorzugt aufweisend mindestens eine Wägezelle 4. Eine derartige Küchenmaschine ist bspw. aus der DE 10 2009 059 242 A1 bekannt. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Zur Lagerung eines Rührgefäßes 5 in der Küchenmaschine 1 ist diese mit einer Aufnahme 6 versehen. Ein in dem Gehäuse 2 angeordneter, nicht dargestellter Elektroantrieb treibt ein innerhalb des Rührgefäßes 5 im Bodenbereich angeordnetes Rührwerk 7 an. Die Drehzahl des Rührwerks 7 ist bevorzugt über einen Schalter 8 einstellbar.

In dem Gehäuse 2 ist weiter ein Chassis 9 angeordnet, welches sich auf der Wägezelle 4 abstützt. Letztere stützt sich wiederum auf dem Gehäuseboden 10 ab. Die Wägezelle 4 nimmt demzufolge das Gewicht des Rührgefäßes 5 und des in dieses einzufüllenden Gutes auf. Weiter wirken in bevorzugter Ausgestaltung zugleich auch die Gewichte des Chassis 9 sowie der auf dem Chassis 9 angeordneten Maschinenteile, wie bspw. der Elektroantrieb, ggf. eine Heizung, auf die Wägezelle 4 ein.

Das über eine lediglich schematisch angezeigte Elektronik 12 ausgewertete Wägeergebnis wird in einem Display 11 der Küchenmaschine 1 angezeigt.

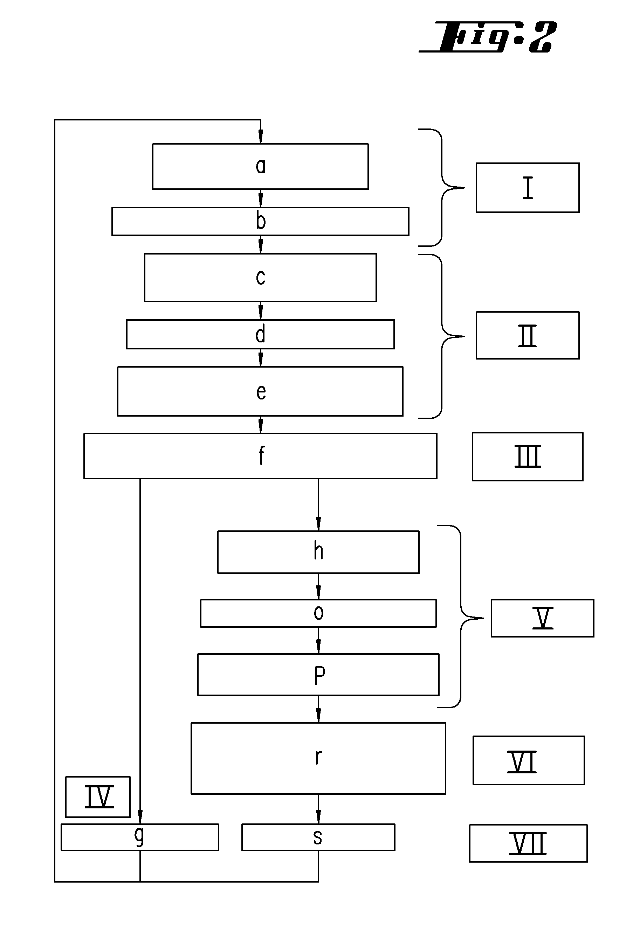

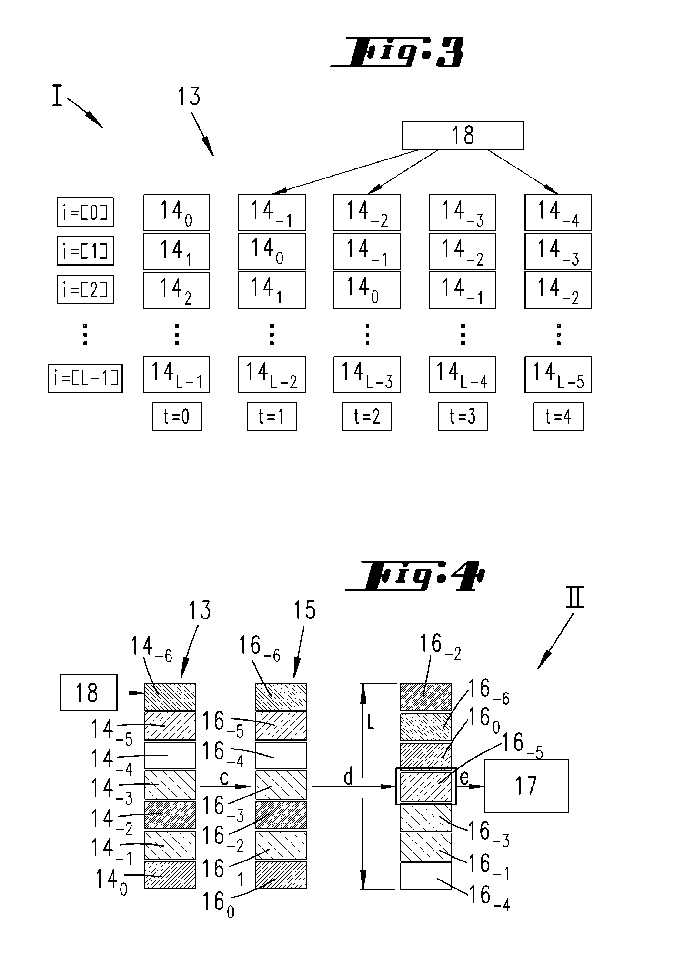

In der Elektronik 12 wird das Speicherfeld zur Aufnahme der eingehenden Gewichtswerte als Schieberegister aufgebaut, welches ein erstes Register 13 darstellt. In jedem Programmzyklus erhöht sich der Index i aller Werte, wobei der älteste Wert an der höchsten Indexstelle i = L - 1 überschrieben wird und aus der Sortierung herausfällt (Programmpunkt a im Flussdiagramm in Fig. 2). Der kleinste Index [0] wird dabei frei und kann durch den aktuellen Messwert über den Dateneingang 18 beschrieben werden (Programmpunkt b in Fig. 2). Dieser in Fig. 2 mit I zusammengefasste Programmschritt ist in Fig. 3 detailliert dargestellt.

Das Verfahren verwendet eine beliebige aber ungerade Anzahl von Speicherstellen für Messwerte 14₀, 14₁ bis 14ₙ in diesem ersten Register 13 (Dateneingangsregister). Für den bevorzugten und nachstehend weiter beschriebenen Programmablauf und die Umsetzung der bevorzugten Dynamisierung werden bevorzugt zwei Abstufungen der Registerlänge mit den Bezeichnungen L (ungekürztes Register) und K (gekürztes Register) benötigt. Hierbei gilt L > K, wobei das erste Register 13 die Gesamtlänge L bzw. den Indexbereich der Felder i = [0] bis i = [L - -1] aufweist.

Fig. 3 zeigt beispielhaft über nacheinander folgende Zeitpunkte t das Nachrücken des ersten Registers 13 und das Einfügen eines neuen Messwertes an Index i = [0].

Die Einschaltverzögerung des Displays 11 kann durch Vorladen des gesamten ersten Registers 13 zum Zeitpunkt t = 1 mit dem Wert 14₋₁ reduziert werden.

Zur Filterung wird das erste Register 13 (Schieberegister) in ein zweites Register 15 (Sortierfeld) identischer Länge kopiert (Programmpunkt c in Fig. 2). Dies dient der Erhaltung der chronologischen Ordnung im ersten Register 13 für eine spätere Dynamikprüfung. Im Sortierfeld (zweites Register 15) selbst wird durch einen gängigen Sortieralgorithmus wie bspw. Quicksort die Reihenfolge der Werte 16 bzw. der Speicherstellen des zweiten Registers 15 abhängig von der Größe der Werte geändert (Programmpunkt d in Fig. 2). Aus dem sortierten zweiten Register 15 wird der mittlere Wert 17 am Index i = [(L -1)/2] entnommen. Dieser den Medianwert darstellende mittlere Wert 17 wird hiernach bevorzugt in einer vorläufigen Variablen "Medianwert-Lang" abgelegt (Programmpunkt e in Fig. 2). Die Übergabe der Messwerte an das zweite Register 15, die Sortierung der Ergebnisse der Größe nach und das Extrahieren des mittleren Wertes 17 erfolgt insgesamt im Programmabschnitt II des Flussdiagrammes in Fig. 2 und ist weiter in Fig. 4 detailliert dargestellt.

Diese Berechnung wird in jedem Zyklus durchgeführt und wird nicht durch eine nachfolgend weiter beschriebene Dynamikprüfung beeinflusst. Der abgelegte mittlere Wert 17 "Medianwert-Lang" wird im weiteren Verlauf entweder für die Ausgabe des Ergebnisses oder für das sog. Vorladen des Eingangsregisters (erstes Register 13) benötigt.

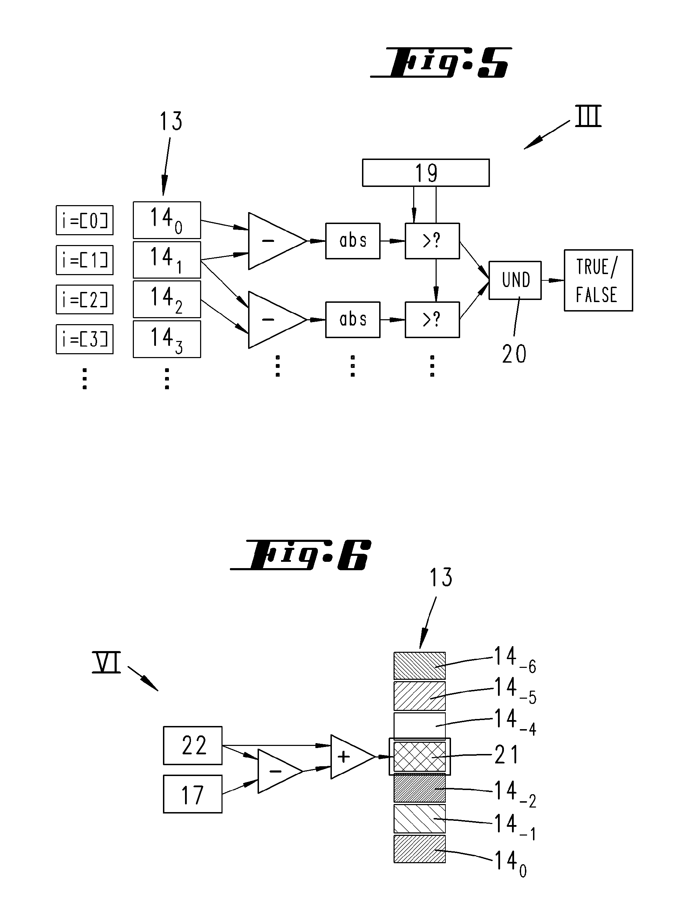

Unabhängig von der ersten Sortierung im zweiten Register 15 und der Ermittlung des mittleren Wertes 17 "Medianwert-Lang" wird eine Dynamikprüfung der Wertehistorie im ersten Register 13 durchgeführt. Dabei werden die Differenzen einer vorgegebenen Menge von benachbarten Werten in den Speicherstellen 14 gebildet (Programmpunkt f in Fig. 2; Programmschritt III; siehe auch Fig. 5). Dies beginnt immer mit dem aktuellen Wert mit dem Index i = [0] und dem Wert des vorangegangenen Zyklus und setzt sich hiernach mit steigenden Indizes fort. Die Absolutwerte der Differenzen werden mit einem wiederum vorgegebenen Schwellwert 19 (bevorzugt im Bereich einiger Gramm) verglichen und einer UND-Verknüpfung 20 zugeführt. Wird die Schwelle in allen Fällen überschritten, verkürzt der Algorithmus das Sortierfeld im zweiten Register 15 von der Länge L auf K, um die Dynamik des Filters zu erhöhen. Durch Nutzung des Algorithmus wird entsprechend erkannt, dass sich das Gewicht in den vergangenen Schritten konstant verändert hat, so dass offensichtlich eine größere Werteänderung durchgeführt wird, die schneller angezeigt werden kann. Die Entscheidung kann durch die Anzahl der Paare von zu vergleichenden Messwerten 14 bzw. den diesbezüglichen Speicherstellen und die Auswahl des Schwellwertes 19 beeinflusst werden. Die Dynamikerhöhung hängt von den beiden Filterlängen L und K und ihrem Unterschied ab. Optional können hier mehr als zwei Schwellwerte 19 und mehr als zwei Filterlängen implementiert werden, um die Abstufung der Dynamik feiner zu gestalten.

Eine Anpassung der Parameter L und K ermöglichen ein an den Nutzer angepasstes Verhalten des Systems bei unterschiedlichen Messraten. So berechnet sich bevorzugt bei einer bekannten Datenrate von weiter bevorzugt dreißig Messungen pro Sekunde und einer vom Benutzer akzeptierten Verzögerung von bevorzugt 0,2 Sekunden der Parameter K für das gekürzte Register beispielhaft zu K = FLOOR [(30 * 0,2) /2] + 1 = 5. Der Parameter L für das ungekürzte Register wird bevorzugt empirisch festgelegt, so entspricht der Wert L insbesondere dem zweifachen Wert K des gekürzten Registers plus 1.

Sofern die Dynamikprüfung (Programmpunkt III) keine Notwendigkeit zur Beschleunigung der Werteausgabe feststellt, wird der zwischenzeitig abgelegte "Medianwert-Lang" (ermittelt als mittlerer Wert 17 aus dem zweiten, ungekürzten Register 15) als Ergebniswert ausgegeben. Dies ist in Fig. 2 in Punkt g dargestellt. Der Programmzyklus beginnt hiernach erneut bei der Indexerhöhung des ersten Registers 13 (Schieberegister) und der Aufnahme eines neuen Messwertes 14.

Im Falle einer in Punkt III erfassten Dynamikerhöhung wird erneut die Sortierfunktion aufgerufen. In diesem Fall wird allerdings nur ein Teil des ersten Registers 13 mit der Länge K in das zweite Register 15 zur Sortierung kopiert. Die Länge des zweiten Registers 15 passt sich hierbei dynamisch an die übergebene Datenmenge an (Programmpunkt h in Fig. 2). In diesem gekürzten Register wird erneut bevorzugt mit Quicksort oder einem weiteren Sortieralgorithmus die Reihenfolge korrigiert (Sortierung der Größe nach gemäß Programmpunkt o in Fig. 2) und der Wert am Index i = [(K - 1) /2] als "Medianwert-Kurz" bestimmt (Programmpunkt p in Fig. 2) und am Ende des Programmzyklus ausgegeben (Programmpunkt s bzw. Programmschritt VII in Fig. 2). Der in Fig. 2 dargestellte Programmschritt V beinhaltet die anteilige Übergabe der Werte aus dem ersten Register 13 in das zweite Register 15, die Sortierung im zweiten Register 15 und das Extrahieren des mittleren Wertes 22 "Medianwert-Kurz".

Während sich der Wechsel der Filtertiefe zu einer höheren Dynamik (Länge des zweiten Registers 15 verkürzt von L auf K) kaum in der Anzeige der angestrebten Waagenanwendung abbildet, ist der Wechsel zu einer niedrigeren Dynamik mit einem deutlich sichtbaren Sprung der Anzeigewerte verbunden. Um dieses Phänomen zu unterbinden, wird das unsortierte erste Register 13 in jedem Programmzyklus mit hoher Dynamik mit einem berechneten Anpassungswert 21 modifiziert. So folgt entsprechend eine Glättung des Filterwechsels im Programmschritt VI bzw. Programmpunkt r in Fig. 2. Damit passt der erste Programmzyklus mit niedriger Dynamik nach dem Wechsel der Filtercharakteristik in seinem Ergebniswert besser zum vorherigen Ergebniswert.

Die Modifikation betrifft den mittleren Wert des ersten Registers 13 am Index i = [(L -1) /2] und basiert auf der Summe aus dem aktuellen "Medianwert-Kurz" 22 und der Differenz aus den beiden Medianwerten 17 und 22, entsprechend der Dynamikdifferenz (vgl. Fig. 6). Mit dieser Maßnahme verringert sich der Anzeigensprung während der Dynamikumschaltung von hoher zu niedriger Dynamik deutlich.

Im Anschluss an die Modifikation des ersten Registers 13 wird der Programmzyklus mit der Ausgabe des mittleren Wertes "Medianwert-Kurz" 22 als aktueller Anzeigewert beendet. Die Hauptschleife kehrt damit auch aus diesem Programmzweig zurück zur Indexerhöhung des ersten Registers 13 und der Aufnahme des nächsten Messwertes.

Zufolge der vorgeschlagenen Lösung wird eine Dynamisierung einer Medianfilterung durch die Umschaltung zwischen zwei oder mehreren Filtertiefen erreicht, dies aufgrund des historienbasierten Vergleichs mit einer einstellbaren Änderungsschwelle. Der Vergleich wird in jedem Programmzyklus aktualisiert. Die Dynamik ist über die Filterlängen sowie ihren Unterschied, die Anzahl der Vergleiche (Reichweite in die Vergangenheit) und die Höhe der Änderungsschwelle beeinflussbar.

Zudem ist eine Modifikation der Dateneingangshistorie zur Verringerung des Anzeigensprungs bei der Umschaltung der Dynamik erreicht. Auf Basis der Distanz der beiden berechneten Medianwerte 17 und 22 wird der Dateneingang angepasst, um die Umschaltung zu glätten.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

### Bezugszeichenliste

- 1: Küchenmaschine
- 2: Gehäuse
- 3: Waage
- 4: Wägezelle
- 5: Rührgefäß
- 6: Aufnahme
- 7: Rührwerk
- 8: Schalter
- 9: Chassis
- 10: Gehäuseboden
- 11: Display
- 12: Elektronik
- 13: erstes Register
- 14: Messwerte
- 15: zweites Register
- 16: Werte
- 17: mittlerer Wert (Medianwert-Lang)
- 18: Dateneingang
- 19: Schwellwert
- 20: UND-Verknüpfung
- 21: Anpassungswert
- 22: mittlerer Wert (Medianwert-Kurz)

- a: Programmpunkt
- b: Programmpunkt
- c: Programmpunkt
- d: Programmpunkt
- e: Programmpunkt
- f: Programmpunkt
- g: Programmpunkt
- h: Programmpunkt
- i: Index
- o: Programmpunkt
- p: Programmpunkt
- r: Programmpunkt
- s: Programmpunkt
- t: Zeitpunkt

- L: ungekürztes Register
- K: gekürztes Register

- I: Programmschritt
- II: Programmschritt
- III: Programmschritt
- IV: Programmschritt
- V: Programmschritt
- VI: Programmschritt
- VII: Programmschritt

## Patentansprüche

1. Verfahren zur Generierung eines Display-Anzeigewertes bei einer Gewichtsmessung mit einer Waage (3), insbesondere einer Küchenwaage, wobei in einer Zeitabfolge digital erfasste Gewichtswerte in der Abfolge ihrer Erfassung in ein erstes Register (13) geschrieben werden, wobei weiter die in dem ersten Register (13) enthaltenen Werte in einer bestimmten Abfolge jeweils in ein zweites Register (15) übertragen werden, in welchem zweiten Register (15) eine Sortierung der Werte durchgeführt wird und ein mittlerer Wert (17, 22) der sortierten Werte bestimmt wird, und danach der mittlere Wert (17, 22) des zweiten Registers (15) als Anzeigewert verwendet wird, **dadurch gekennzeichnet, dass** nur ein Teil der Werte des ersten Registers (13) in das zweite Register (15) übertragbar ist, wobei der Teil, der übertragen wird, in Abhängigkeit eines Werteanstieges der Werte des ersten Registers (13) in der Reihenfolge Ihres Eintrages in das erste Register (13) bestimmt wird.

2. Verfahren nach Anspruch 1 oder insbesondere danach, **dadurch gekennzeichnet, dass** der Wert eines vorbestimmten Registerplatzes in dem zweiten Register (15), nach erfolgter Sortierung, als mittlerer Wert (17, 22) genommen wird.

3. Verfahren nach Anspruch 1 oder insbesondere danach, **dadurch gekennzeichnet, dass** der Werteanstieg als Absolutwert berechnet wird.

4. Verfahren nach Anspruch 1 oder insbesondere danach, **dadurch gekennzeichnet, dass** die in das erste Register (13) geschriebenen Werte bezüglich ihres Änderungsbetrages geprüft werden und in Abhängigkeit des Änderungsbetrages die Anzahl der in das zweite Register (15) übertragenen Werte geändert wird.

5. Verfahren nach Anspruch 1 oder insbesondere danach, **dadurch gekennzeichnet, dass** der Änderungsbetrag mit einem Schwellwert (19) verglichen wird und in Abhängigkeit des Überschreitens des Schwellwertes (19) die Änderung der Länge des zweiten Registers (15) vorgenommen wird.

6. Verfahren nach Anspruch 1 oder insbesondere danach, **dadurch gekennzeichnet, dass** mehrere Schwellwerte (19) verwendet werden und die Länge des zweiten Registers (15) entsprechend einer Überschreitung des ersten oder eines weiteren Schwellwertes (19) unterschiedlich geändert wird.

7. Verfahren nach Anspruch 1 oder insbesondere danach, **dadurch gekennzeichnet, dass** im Falle einer Verkürzung des zweiten Registers (15) in das erste Register (13) ein Berechnungswert (21) eingeschrieben wird.

8. Verfahren nach Anspruch 1 oder insbesondere danach, **dadurch gekennzeichnet, dass** der Berechnungswert (21) aus den mittleren Werten (17, 22) abgeleitet wird.

9. Verfahren nach Anspruch 1 oder insbesondere danach, **dadurch gekennzeichnet, dass** der Berechnungswert (21) an die Stelle des ersten Registers (13) eingeschrieben wird, die bei Übertragung in das zweite Register (15) dem mittleren Wert entspricht.

10. Verfahren nach Anspruch 1 oder insbesondere danach, **dadurch gekennzeichnet, dass** die Ableitung durch Bildung einer Differenz des mittleren Wertes (17) bei unveränderter Länge (L) des zweiten Registers (15) und des mittleren Wertes (22) bei verkürzter Länge (K) des zweiten Registers (15) vorgenommen wird, vermehrt um den mittleren Wert (22) bei verkürzter Länge (K) des zweiten Registers (15).
